# EUROPEAN PATENT APPLICATION

(11) **EP 1 363 266 A2**
(43) Date of publication of application: **19.11.2003**
(21) Application number: 03010400.4
(22) Date of filing: 08.05.2003
(51) Int. Cl.: G09G 3/36, G09G 3/20

(54) **Displaying static images using spatially displaced sampling with semantic data**

(30) Priority: 13.05.2002 US 145317
(71) Applicant: MICROSOFT CORPORATION, Redmond, WA 98052 (US)
(72) Inventor: Hitchcock, Gregory, Woodinville, Washington 98072 (US); Linnerud, Paul, Woodinville, Washington 98072 (US); Narayanan, Raman, Kirkland, Washington 98033 (US); Stamm, Beat, Redmond, Washington 98073 (US); Duggan, Michael, Kirkland, Washington 98034 (US)
(74) Representative: Grünecker, Kinkeldey, Stockmair & Schwanhäusser Anwaltssozietät

(57) **Abstract**

Methods and systems for utilizing metadata to preserve semantic information related to an image to allow a static version of the image to be displayed with sub-pixel precision on display devices having pixels with separately controllable pixel sub-components. A static version of an image can be displayed on a display device having a relatively low resolution, such as those associated with handheld devices, while maintaining the sub-pixel precision positioning. The image is displayed on a display device, such as a liquid crystal display device, having separately controllable pixel sub-components. The sub-pixel precision positioning is used to map spatially different sets of samples to individual pixel sub-components rather than to entire pixels, resulting in image features, such as character edges, being displayed at pixel subcomponent boundaries, rather than always at boundaries between full pixels.

## Description

### BACKGROUND OF THE INVENTION

### 1. The Field of the Invention

The present invention relates to rendering an image with sub-pixel precision. More particularly, the present invention relates to systems and methods for utilizing metafiles to store semantic information related to an image to allow a static version of the document to be rendered with sub-pixel precision on a display device having pixels with separately controllable pixel sub-components.

### 2. Background and Relevant Art

In recent years, various image data formats have been developed for obtaining a static version of an image in which the image feature positions are defined with respect to fixed locations, such as the boundaries of a page. One such data format is the Portable Document Format ("pdf"), which enables a document to be displayed, with the image features of the document being displayed in a static manner with respect to a page of the document. In general, such static image data formats allow images of documents to be displayed in a device-independent manner. In order to provide a rendering process that is independent of the nature of the particular document format in which the image data is stored and/or the particular display device on which the image is to be displayed, the image is partially rendered before being sent to the viewer. The partial rendering of the image comprises converting the image data from the particular document format in which the image data is stored into a pickled (or portable) document format. The pickled document format preserves the overall format of the image features with respect to pages of the document while allowing the image to be rendered on any of a variety of devices with a simple, non-document specific viewer. Such images, regardless of the data format used to encode the images, are referred to herein as "static images," "static versions of an image," or "pickled documents."

Situations in which static images are used include printing a document, whether on a computer printer or the analogous operation of displaying a static image of the document on a display device. One example of displaying a static image on a display device is the process of rendering a static image of a document on a handheld computer or other electronics device. This process is performed when, for instance, the user desires to view an electronic image of a document, rather than a printed paper version of the document, so that the user can view the image, annotate the image, etc. In order to achieve this result, the document, such as a text document, is converted to a pickled document. The pickled document is then "played", resulting in the document being displayed on the display screen of the handheld device. Static images are also useful in the context of the print preview functionality (i.e. WYSIWYG) provided by some applications. In summary, static images can be useful when an image is to be displayed in a device-independent manner and with its overall formatting and pagination intact, and when the underlying features of the image (e.g., characters) do not need to be edited.

Prior to the creation of a static version, images are typically formatted in a higher resolution or include image data that defines the image at a higher resolution than can be displayed on the display device, particularly when the display device has a relatively low resolution, such as those commonly found on handheld devices. The original image data can be stored efficiently at a resolution of 600 dots per inch ("DPI") or higher. Although higher resolutions are possible, images having resolutions of this magnitude are generally not noticeably different from images displayed at significantly higher resolutions when viewed by typical viewers under normal display conditions on a typical display screen. Resolutions of 600 DPI are compatible with the resolution supported by many ink jet and laser printers. Images having a resolution of 600 DPI provide the clarity of print media expected by users of word processing and other graphics systems. Such resolutions also facilitate the preparation of an image for conversion to pickled document formats. While 600 DPI is used to describe resolutions utilized that provide image quality desired for graphics images while also providing efficient storage and display of image, other resolutions which provide comparable image quality can also be used.

The resolution of liquid crystal display ("LCD") devices used in most handheld devices is typically no greater than approximately 100-130 DPI (often 96 DPI) due to the technical and cost constraints associated with manufacture of LCD and other displays and the power and data processing limitations of handheld devices. The resolution of LCD display devices is typically determined based on the numbers of full pixels per inch rather than the number of pixel sub-components per inch. When a static image of a document is displayed on a handheld device in the manner described above, the image is typically displayed at a relatively low resolution.

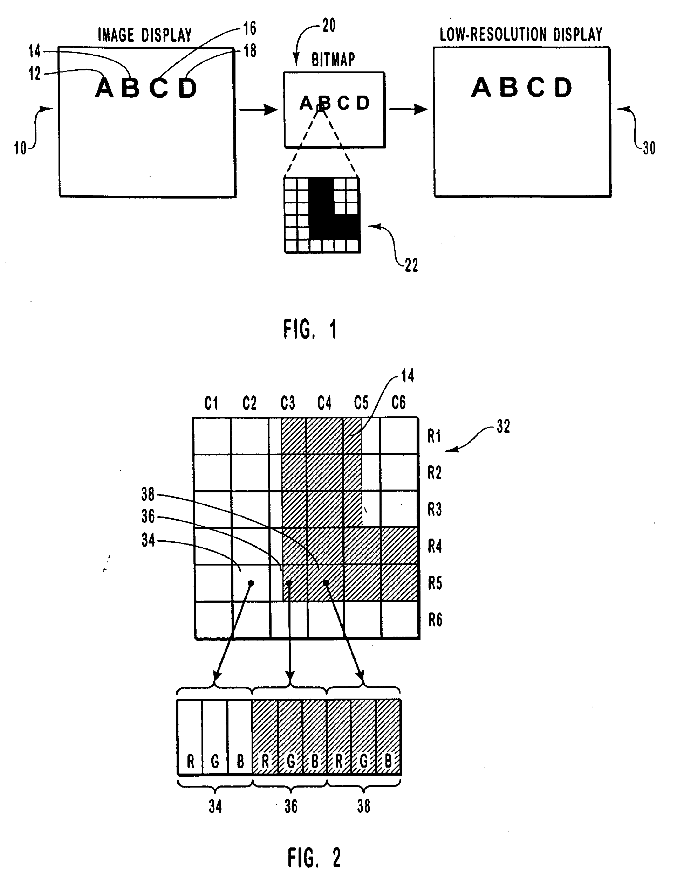

Figure 1 illustrates a conventional method of converting images for display on a display device from a high resolution format to a binary bitmap utilized to display pickled documents. As shown in Figure 1, image data 10 includes a first image 12, a second image 14, a third image 16, and a fourth image 18. The image data 10 defines images 12, 14, 16, 18 in a high-resolution parallel format (i.e. 600 DPI.) As part of the serialization routine, the images are converted to a binary format in which the images 12, 14, 16, 18 can be loaded and displayed in a device independent fashion. The binary format is associated with bitmap 20. The resolution of bitmap 20 corresponds with the lower-resolution display device. In general, the lower resolution bitmap 2⁰ has a resolution less than that of the high-resolution parallel format image data 10 because the lower resolution bitmap requires less memory and processing capabilities and further because the LCD display device of the handheld device displays the images at the lower resolution.

Grid 22 shows a portion of the bitmap 20 in greater detail to illustrate how images are configured in a bitmap. The bitmap of the image is created by rounding coordinates of the image to the lower resolution coordinate space of the display device. For example, assuming 600 DPI resolution associated with image data 10 and 100 DPI resolution of the display device, the coordinates of the 600 DPI image are divided by six and rounded to the nearest integer value. In other words, a 6:1 scaling factor is used to scale the 600 DPI image to the bitmap displayable on the 100 DPI display device. This results in image features being displayed by whole pixels, with the edges of image features being rounded to the full pixel boundaries of the display device. Traditional anti-aliasing, also known as gray scaling, is typically applied to the image to smooth the jagged appearance of curved and diagonal lines of features of the image that are caused by the poor resolution with which the image is displayed. Gray scaling involves applying intermediate luminous intensity values to the pixels that depict the edge of an image to minimize the stair-stepped appearance of the edge of the image.

The binary code of bitmap 20 containing scaled versions of images 12, 14, 16, 18 controls whether particular pixels of low-resolution display 30 are turned on or off. Utilizing the bitmap 20 permits images 12, 14, 16, 18 to be displayed on low-resolution display 30. However, during the creation of the bitmap 20, semantic information, such as font attributes or other graphics attributes, and the information defining the position of the features of the image at the higher resolution coordinate space are not preserved. All that is left of the original data file is the binary code of bitmap 20 that controls the pixels of display 30.

Figure 2 illustrates a related characteristic of conventional display techniques used with LCD display devices, regardless of their resolution. As shown in Figure 2, the image data defines image 14 with sub-pixel precision, meaning that some features of the characters or other image can have a position that lies between the corresponding full-pixel boundaries of the display device. In this example, a grid 32 is superimposed over the image data and has columns C1-C6 and rows R1-R6 that correspond to the position of the full pixels in the display device. The position of image 14 is defined, for example, by sub-pixel coordinates, such that the left boundary of image 14 is not coterminous with the full pixel boundary between columns C2 and C3.

However, during the rendering of the image 14, the boundary of image 14 is rounded to a full pixel boundary. While various routines have the effect of rounding features of an image to full pixel boundaries, a typical sampling routine is described for illustrative purposes. In the sampling routine, a sample is taken at the center of each portion of the image data that corresponds to a full pixel. In Figure 2, the sampling of the image data at positions that correspond to pixels 34, 36, and 38 is illustrated. Typically, the center of the region corresponding to the pixel is the point that is sampled and is used to control the luminous intensity of the entire corresponding pixel. Thus, since the sample at the center of the region that corresponds to the pixel 34 does not fall on the character body, the red pixel sub-component 34R, the green pixel sub-component 34G, and the blue pixel sub-component 34B are controlled accordingly (given maximum luminous intensity in this example). Conversely, the RGB pixel sub-components of 36 and 38 are controlled together (given no luminous intensity in this example) due to the corresponding sample falling within the character body. The use of maximum luminous intensity for the background pixels and the minimum luminous intensity for the foreground pixels in the illustrated embodiment is provided for illustrative purposes. Any combination of maximum, minimum, and or intermediate luminous intensity values to depict foreground and/or background pixels can be used without departing from the scope and spirit of the present invention. A single sample for each pixel controls the luminous intensity applied to the three pixel sub-components and the portion of the image data is displayed by the three pixel sub-components operating together. As a result, the character edges fall on full pixel boundaries.

In the rendering of an image that is stored in a serialized, binary format, conventional viewers convert the image to lower resolution bitmap allowing the image to be displayed on the display device. During the conversion to the bitmap in which the image is positioned at full pixel boundaries, the higher resolution used to position the image with sub-pixel precision is lost. One problem with rounding characters to the nearest whole pixel is that rounding errors unavoidably compound and create variability in the spacing between the characters. Another associated problem is that the characters themselves are displayed in a less precise manner on the lower resolution display device. In summary, serialized or pickled images displayed on low-resolution display devices, such as handheld devices, utilizing traditional viewers can result in poor image quality and uneven spacing between characters.

### BRIEF SUMMARY OF THE INVENTION

The present invention relates to rendering of an image with sub-pixel precision. More particularly, the present invention relates to systems and methods for utilizing metafiles to store semantic information related to an image to allow a static version of the image to be displayed with sub-pixel precision on display devices having pixels with separately controllable pixel sub-components. According to the invention, a static version of an image can be displayed on a display device having a relatively low resolution, such as those associated with handheld devices, while utilizing sub-pixel precision positioning information to display the image.

The improved resolution is obtained by using the separately controllable pixel sub-components (e.g., the red, green and blue sub-components) of an LCD pixel as separate luminous intensity sources to represent spatially different portions of the image. The separately controllable pixel sub-components are discussed in the context of red, green, and blue sub-components to clearly describe the present invention. It will be understood, however, that any number of configuration of pixel sub-components can be used in the context of the present invention without, regardless of the patterns formed by the pixel sub-components. Spatially displaced samples or sets of samples are mapped to the individual pixel sub-components. This is in contrast to the conventional technique of mapping a single sample to an entire three-part pixel and controlling the entire three-part pixel to represent a single portion of the image. Thus, the static version of the image is rendered with improved resolution in the direction perpendicular to the stripes of pixel sub-components on the display device compared to the resolution that has been achieved with conventional systems. While the present invention is discussed primarily with respect to a static version of an image, the techniques utilized in the context of the present invention can be applied to general purpose graphics images within the scope and spirit of the present invention, including images that include text and those that do not.

In order to achieve the improved resolution, the semantic information (e.g., font attributes or other graphics attributes) is preserved and encoded in a metafile. The font attributes can include, but are not limited to, font family, image size, color, etc. Font attributes represent one example of graphics attributes. In those instances in which general graphics are rendered rather than characters, the graphic attributes that are preserved and encoded in the metafile include attributes analogous to the font attributes described herein. Moreover, the metafile includes information defining a high-resolution layout of the image that is typically at a resolution significantly greater than that of the display device. The position of objects such as characters or other image features in the higher-resolution coordinate space defined by the metafile enables the sub-pixel precision position of the characters to be preserved and used during the rendering process.

In one embodiment, the image data is stored in a pickled format in the metafile at a relatively high resolution (e.g., 600 DPI) that is significantly greater than the resolution of the display device. The semantic information and the high resolution of the metafile allow the viewer of the present invention to display the image with sub-pixel precision. In one embodiment of the present invention, the metafile comprises an enhanced metafile ("EMF") for storing the high-resolution version of the image and the semantic information associated with the image. By storing the semantic information associated with the image, the image data is compatible with the rendering processes that use individual pixel sub-components as separate luminous intensity sources. This allows static versions of images to be displayed with improved resolution and improved character spacing on existing handheld devices. As a result, high quality static, or pickled, images can be viewed on such handheld devices, enabling the images to be used for convenient viewing, annotation, or with other applications.

Additional features and advantages of the invention will be set forth in the description which follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:
Figure 1 illustrates a method of creating a static version of an image while converting the image data from a higher resolution format to a binary bitmap for display on a display device in the prior art.
Figure 2 illustrates a rendering process applied to image data using an LCD display device, in which entire three-part pixels are used to represent single portions of an image according to the prior art.
Figure 3 illustrates a displaced sampling rendering process whereby individual pixel sub-components are used as separate luminous intensity sources to represent different portions of an image.
Figure 4 illustrates an overview of a rendering process that can be used with the invention to achieve improved resolution on display devices having pixels with separately controllable pixel sub-components.
Figure 5 illustrates image data and underlying semantic data utilized in the context of the present invention.
Figure 6 illustrates a rendering process according to the invention by which semantic information is utilized to display a pickled image with sub-pixel precision.
Figure 7 illustrates an example of an operating environment in which the present invention can be utilized.

### DETAILED DESCRIPTION OF THE PREFERRED EMBODIMENTS

The present invention enables static versions of images to be displayed on relatively low-resolution display devices in a manner that yields higher resolution than conventional techniques that rely solely on a bitmap. In particular, the viewer of the present invention utilizes information stored in a metafile defining an image at a relatively high resolution and associated semantic information (e.g., font attributes or other graphics attributes) to display a static version of an image, or other graphics version of an image, with pixel sub-component precision. This enables the individual pixel sub-components to be used to display the static version of the image with higher resolution than has been previously possible, particularly on display devices that have relatively low resolutions, such as those commonly used with LCD display devices.

The display of a static version of an image is utilized in a variety of computer related technologies including handheld devices. Static versions of an image have been conventionally created by converting image data into a pickled (or portable) document that is capable of being displayed on a display device utilizing a viewer. Static images, or pickled documents, allow the image to be saved and loaded in a device-independent format while preserving the relative position of objects to one another. The image displayed using the pickled format is referred to as static because the underlying image features (e.g., characters) are not intended to be edited by a user. For example, in a hand-held device, the static image is displayed on the display device. A user can then annotate over the static version of the image without altering the underlying static version being displayed. Other examples of the use of a static version of an image include the print preview functionality and the redline/strikeout functionality adapted to allow viewers to view changes to a document, or the like. While the present invention is discussed with respect to a static version of an image, the present invention can be utilized in connection with general purpose graphics images as well, regardless of whether the image contains characters or other vector graphics features.

The metafile in which the static image is stored contains objects such as characters. graphics attributes such as font attributes, and information defining the position of the characters or other image features at a relatively high resolution. The metafile is a data structure that includes a recording of function calls that define the layout of the image and that, when executed. output the text or other image features at specific locations. The pixel sub-component positioning of the image features according to the invention is achieved using the high resolution with which the image is laid out in the metafile as well as the associated graphics attributes. This allows the character positions as defined in the high resolution space of the metafile to be mapped to sub-pixel coordinate positions of the relatively lower resolution space of the display device on which the image is to be displayed. The rendering engine of the display device "plays" the metafile to display the image with sub-pixel precision utilizing overscaling and sampling processes that will be discussed in greater detail hereinafter. As used herein, the term "sub-pixel precision" used in the context of displaying images on the display device indicates that individual pixel sub-components, rather than entire pixels, represent spatially different portions of the image and that information defining the position of these portions of the image has been defined with a resolution greater than the resolution of the full pixels.

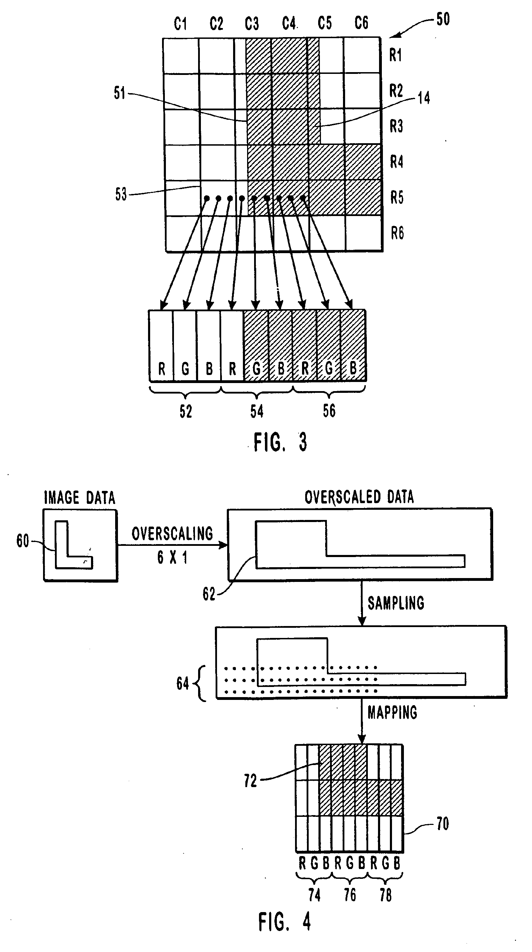

Prior to describing methods for preserving semantic information while processing a static image for display on a display device, reference will be made to Figures 3 and 4, which depict general principles associated with displaced sampling. Such displaced sampling is used in combination with the preserved semantic information to cause static versions of images to be displayed with sub-pixel precision on liquid crystal display devices and other display devices having patterns of separately controllable pixel sub-components. The portion of character 14 of image data 50 illustrated in Figure 3 is defined by, for example, vector data specifying the position of the edges of the character, as well as information defining a foreground and background color. Figure 3 also illustrates a grid having rows R1-R6 and columns C1-C6 that correspond to the position of full pixels on the display device.

Rather than mapping single samples of the image data 50 to full pixels, displaced sampling involves mapping spatially different sets of one or more samples to individual pixel sub-components. This approach takes advantage of the fact that pixel sub-components of LCD display devices, unlike typical cathode ray tube ("CRT") display devices, are separately addressable and can be controlled independently of other pixel sub-components in the same pixel. Moreover, the pixel sub-components of LCD display devices are generally physically configured in sets of three and the pixel sub-components often are aligned in vertical or, less commonly, horizontal, stripes of same-colored elements.

By utilizing displaced sampling, the image can be displayed on the display device at pixel sub-component boundaries rather than at full pixel boundaries. It is noted that, in the illustrated example, the left edge 51 of character 14 falls at a position between the full pixel boundary between column C2 and column C3. In the prior art example of Figure 2, mapping a single sample to the full pixel results in the left edge of the character being displayed at a full pixel boundary. In contrast, mapping the displaced samples 53 to individual pixel sub-components of pixels 52, 54 and 56 enables the left edge 51 of character 14 to be effectively rendered at the boundary between pixel sub-components. In particular, in the illustrated example, the left edge of character 14 lies between the red and green pixel sub-components of pixel 54. By utilizing displaced sampling, the green pixel sub-component 54G corresponds to the body of character 14, while the red pixel sub-component 54R represents a portion of the image outside the outline of the character. Thus, the position of the left edge 51 of character 14 is more accurately displayed on the display device. This increases both the accuracy of the width of the character features and the spacing between adjacent characters. It is noted that, although only samples 53 mapped to the sub-components of pixels 52, 54 and 56 are illustrated in Figure 3, the process is repeated for the other pixels used to render the image.

Figure 4 illustrates a sequence of data processing operations that can be used to achieve the displaced sampling generally illustrated in Figure 3 to enable individual pixel sub-components to represent spatially different portions of an image. For the purpose of clarity, only a portion of the image, the image data, the samples, and the display device are illustrated. While the following description illustrates the sub-pixel rendering process, image data processing operations that can be utilized in the context of the present invention are described in greater detail in U.S. Patent No. 6,219,025, which is incorporated by reference.

In the sequence of data processing operations, first, image data 60 is overscaled by an overscaling factor in the direction perpendicular to the striping of the pixel sub-components in the display device to compensate for the differential in the sub-component height and width. In other words, the image data 60 is scaled in the direction perpendicular to the striping by a factor greater than the scaling in the direction parallel to the striping. In this example, an overscaling factor of six is applied in the direction perpendicular to the striping to generate overscaled data 62. The overscaling factors that can be utilized are not limited to factors of 6:1 applied in the direction perpendicular to the striping of the display device, but can be applied in any direction while being selected to correspond to the number of samples that are to be obtained per pixel of the display device. For example, sampling can be applied in the direction parallel to the striping of the display device using a 6:5 overscale factor.

Once the image has been overscaled, sampling is conducted on the image data. Sampling involves identifying the luminous intensity information that is to be applied to individual pixel sub-components. Identifying the luminous intensity values to be applied has the effect of determining whether the particular pixel sub-components on the display device correspond to positions that fall inside or outside the character outline. In the example of Figure 4, six samples are obtained per pixel, or two samples per pixel sub-component. The number of samples obtained per pixel or per pixel sub-component can vary, although the number is generally at least one sample per pixel sub-component. For purposes of illustration, Figure 4 depicts the samples 64 generated only in a selected region of image data and also depicts only the corresponding pixels and pixel sub-components rather than illustrating all of the samples.

Once the samples are obtained, the samples are mapped to individual pixel sub-components, resulting in spatially different portions of the image data being mapped to individual pixel sub-components. The image data processing operations of Figures 3 and 4 allow the edges of the characters to fall on the boundaries between any pixel sub-components, rather than always falling on the full pixel boundaries. Grid 70 depicts a portion of the image 72 rendered with sub-pixel precision. The left edge of the image 72 falls on a pixel sub-component boundary rather than on a full pixel boundary. It can be seen that the left edge of image 72 falls on the boundary between the green pixel sub-components 74G and blue pixel sub-components 74B, while the full pixel edge lies between the blue pixel sub-components 74B and red pixel sub-components 76R.

In the present invention, overscaling can be replaced by supersampling. In particular, supersampling involves obtaining more samples in the direction perpendicular to the striping of the pixel sub-components than in the direction parallel to the striping. Overscaling, supersampling, and direct rendering generate the equivalent result of providing at least one sample per pixel sub-component. Additionally, color filtering operations can be applied to the samples prior to generating the luminous intensity values that will be used to control the pixel sub-components. This can reduce the color fringing effects that can be otherwise present, while sacrificing some resolution. Color filtering operations that can be used with the invention in this manner include those described in U.S. Patent Application Serial No. 09/364,647, which is incorporated herein by reference. In general, as described in the foregoing patent application, color filtering involves selecting sets of samples that are weighted and averaged in order to identify the luminous intensity values to be applied to individual pixel sub-components. Often, the color filters are overlapping, meaning that the samples processed by adjacent color filters (e.g., filters applied to adjacent red, green and blue pixel sub-components) are not mutually exclusive. For instance, a green color filter can be centered about the samples of the image data having a position that corresponds to the position of the green pixel sub-component, but can also extend to the adjacent samples that have positions corresponding to the adjacent red and blue pixel sub-components.

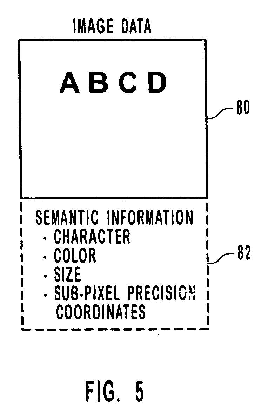

The description now will be directed to the preservation of the information that is used to enable the displaced sampling to be performed with static images, particularly in display environments having relatively low resolution. Figure 5 illustrates image data and the underlying semantic information utilized in a metafile in the context of the present invention. The loss of sub-pixel positioning information in the binary format of the bitmaps utilized in conventional techniques of displaying static versions of an image generally has resulted in such images being displayed at full pixel boundaries. Accordingly, in one embodiment of the present invention, a metafile is utilized to preserve semantic information 82 associated with image data 80. The metafile allows the semantic information 82, including, but not limited to, character information, font attributes, color information and size information to be preserved. Moreover, the metafile includes a set of application program interface (API) calls that define the layout of the image in at a relatively high resolution. The position of characters and other image features within the high resolution coordinate space enables the characters and other image features to be displayed using the displaced sampling techniques described herein.

While in the illustrated embodiment, the image data and the associated semantic information are stored in a metafile, any format can be used that preserves the semantic information and the information defining characters and other image features at the relatively high resolution required for the displaced sampling and sub-pixel rendering routines described herein. Additionally, any type of metafile can be utilized, such as a Microsoft Windows Metafile (WMF), placeable metafile, clipboard metafile, or enhanced metafile (EMF). In a preferred embodiment, an enhanced metafile is used due to the increased functionality and capacity provided by the format. For example, the enhanced metafile format supports more graphics device interface commands related to image data than the Windows Metafile Format (WMF).

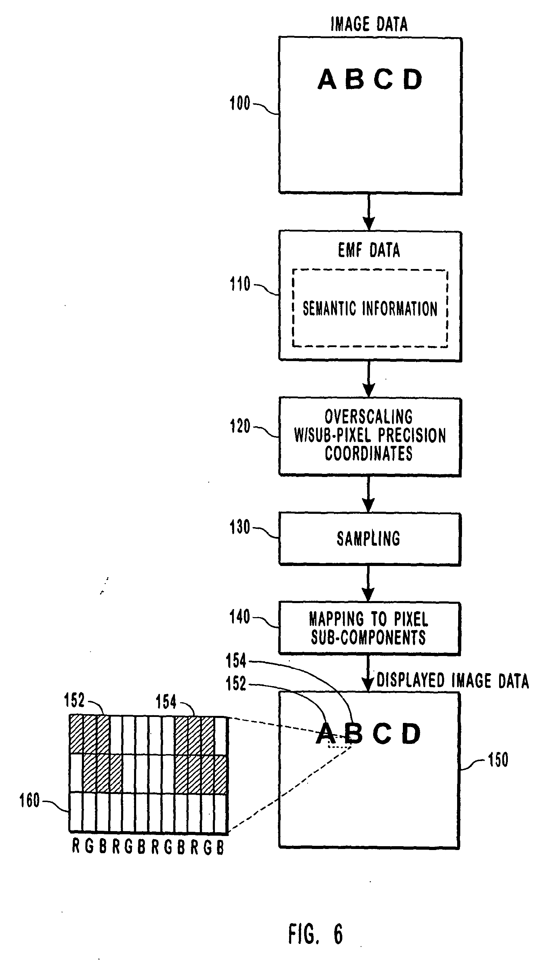

Figure 6 illustrates a method by which semantic information and the positioning information defining the position of image features in the relatively high coordinate space of the metafile is utilized to display a static version of an image with pixel sub-component precision. In the method of Figure 6, image data is accessed in step 100. The image is typically defined by the image data in a format that includes information specifying the position of the characters at resolutions in the range of 600 DPI and higher. The image data also defines semantic information that includes font attributes. The font attributes can include, but are not limited to, character information, color information, image size information, information for determining coordinates of the features of the image etc.

In step 110, the image data is converted from the original data format to a second format that includes metadata in, for example, an enhanced metafile format or another format adapted to provide the semantic information associated with the image. The enhanced metafile format allows the image to be stored at a relatively high resolution, with its associated semantic information as discussed with reference to Figure 5. The high resolution at which the image is stored and the semantic information, such as the graphics attributes, allows the image to be rendered with sub-pixel precision utilizing the image data processing techniques described herein in reference to Figures 3 and 4.

The image data is then overscaled in step 120. The semantic information stored in the metafile defines the graphics attributes associated with image data. The function calls of the metafile places the text in the high DPI space when the metafile is "played" by the rendering engine. The rendering engine utilizes the supersampling or overscaling routines to render the image with sub-pixel precision. For example, font attributes inform the engine that a character will be rendered using a particular font at a particular point size in the high DPI space. The overscaling routines are discussed in greater detail with reference to Figure 4.

Once the image data is overscaled, the overscaled representation is then sampled. Sampling is applied to the image data to identify the luminosity intensity values to be applied to the pixel sub-components of the display device in step 130. The sampling routines are discussed in greater detail with reference to Figure 4. Finally, the samples of the converted image data are mapped to the individual pixel sub-components, allowing the image to be displayed on the display device in step 140 as discussed in greater detail with reference to Figure 4. In the illustrated embodiment of the present invention, the overscaling, sampling, and mapping routines utilize the semantic information to execute the displaced sampling and sub-pixel precision rendering processes of the present invention. The semantic information is accessed from the metafile rather than the image data format in which the image data was originally stored.

Once the samples of the image data are mapped to the individual pixel sub-components, a static version of the image is displayed on a display device in step 150. In this example, characters 152 and 154 are among the features of the image displayed on the display device. Grid 160 represents a portion of the display device and the pixel sub-components associated with portion of the display device. By observing the portions of the characters 152 and 154 on grid 160, it can be seen that features of characters 152 and 154 are displayed with sub-pixel precision rather than being rounded to full pixel boundaries.

The embodiments of the present invention may comprise a special purpose or general-purpose computer including various computer hardware, as discussed in greater detail below. Embodiments within the scope of the present invention also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

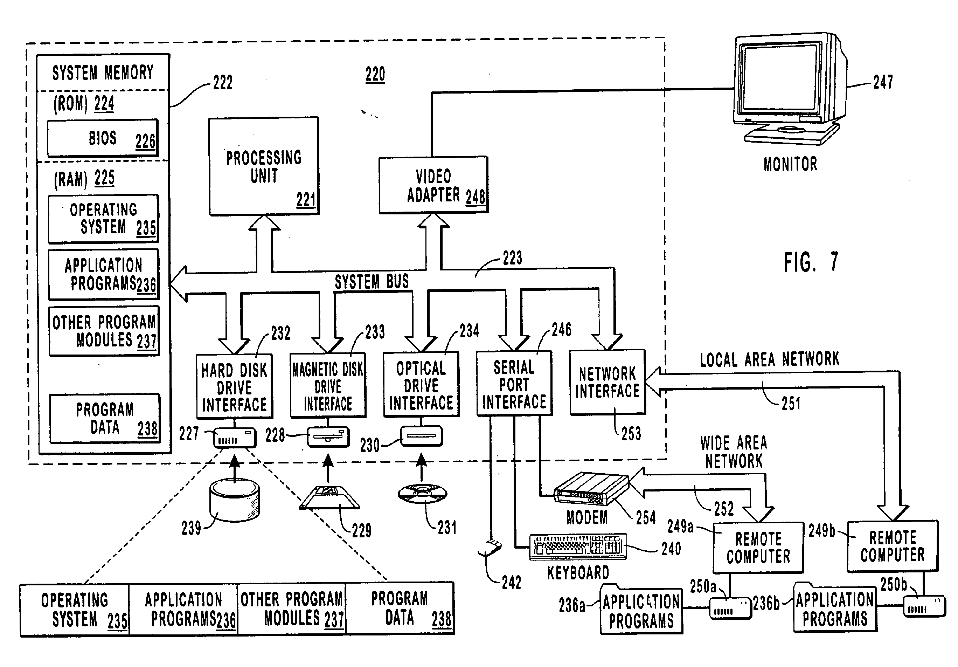

Figure 7 and the following discussion are intended to provide a brief, general description of a suitable computing environment in which the invention may be implemented. Although not required, the invention has been described in the general context of computer-executable instructions, such as program modules, being executed by computers in network environments. Generally, program modules include routines, programs, objects, components, data structures, etc., that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those skilled in the art will appreciate that the invention may be practiced in network computing environments with many types of computer system configurations, including personal computers, handheld devices, multi-processor systems, microprocessor-based or programmable consumer electronics, network PCs, minicomputers, mainframe computers, and the like. As noted herein, the invention is particularly applicable to handheld devices or other computing devices having a display device of relatively low resolution. The invention may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

With reference to Figure 7, an exemplary system for implementing the invention includes a general purpose computing device in the form of a conventional computer 220, including a processing unit 221, a system memory 222, and a system bus 223 that couples various system components including the system memory 222 to the processing unit 221. The system bus 223 may be any of several types of bus structures including a memory bus or memory controller, a peripheral bus, and a local bus using any of a variety of bus architectures. The system memory includes read only memory (ROM) 224 and random access memory (RAM) 225. A basic input/output system (BIOS) 226, containing the basic routines that help transfer information between elements within the computer 220, such as during start-up, may be stored in ROM 224.

The computer 220 may also include a magnetic hard disk drive 227 for reading from and writing to a magnetic hard disk 239, a magnetic disk drive 228 for reading from or writing to a removable magnetic disk 229, and an optical disk drive 230 for reading from or writing to removable optical disk 231 such as a CD-ROM or other optical media. The magnetic hard disk drive 227, magnetic disk drive 228, and optical disk drive 30 are connected to the system bus 223 by a hard disk drive interface 232, a magnetic disk drive-interface 233, and an optical drive interface 234, respectively. The drives and their associated computer-readable media provide nonvolatile storage of computer-executable instructions, data structures, program modules and other data for the computer 220. Although the exemplary environment described herein employs a magnetic hard disk 239, a removable magnetic disk 229 and a removable optical disk 231, other types of computer readable media for storing data can be used, including magnetic cassettes, flash memory cards, digital versatile disks, Bernoulli cartridges, RAMs, ROMs, and the like.

Program code means comprising one or more program modules may be stored on the hard disk 239, magnetic disk 229, optical disk 231, ROM 224 or RAM 225, including an operating system 235, one or more application programs 236, other program modules 237, and program data 238. A user may enter commands and information into the computer 220 through keyboard 240, pointing device 242, or other input devices (not shown), such as a microphone, joy stick, game pad, satellite dish, scanner, or the like. These and other input devices are often connected to the processing unit 221 through a serial port interface 246 coupled to system bus 223. Alternatively, the input devices may be connected by other interfaces, such as a parallel port, a game port or a universal serial bus (USB). A monitor 247 or another display device is also connected to system bus 223 via an interface, such as video adapter 248. As described herein, monitor 247 is a liquid crystal display device or another display device having separately controllable pixel sub-components.

The computer 220 may operate in a networked environment using logical connections to one or more remote computers, such as remote computers 249a and 249b. Remote computers 249a and 249b may each be another personal computer, a server, a router, a network PC, a peer device or other common network node, and typically include many or all of the elements described above relative to the computer 220, although only memory storage devices 250a and 250b and their associated application programs 236a and 236b have been illustrated in Figure 7. The logical connections depicted in Figure 7 include a local area network (LAN) 251 and a wide area network (WAN) 252 that are presented here by way of example and not limitation. Such networking environments are commonplace in office-wide or enterprise-wide computer networks, intranets and the Internet.

When used in a LAN networking environment, the computer 220 is connected to the local network 251 through a network interface or adapter 253. When used in a WAN networking environment, the computer 220 may include a modem 254, a wireless link, or other means for establishing communications over the wide area network 252, such as the Internet. The modem 254, which may be internal or external, is connected to the system bus 223 via the serial port interface 246. In a networked environment, program modules depicted relative to the computer 220, or portions thereof, may be stored in the remote memory storage device. It will be appreciated that the network connections shown are exemplary and other means of establishing communications over wide area network 252 may be used.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A method of operating a processing device associated with a display device that has a plurality of pixels, each pixel having a plurality of separately controllable pixel sub-components, the method for displaying an image on the display device, comprising the acts of:
accessing image data that defines an image;
converting the image data to a data format that includes font attributes defining character features and that includes information having a first resolution defining a layout of the image; and
using the converted image data, displaying the image on a display device having a second resolution that is lower than the first resolution, wherein the pixel sub-components of the pixels represent spatially different portions of the image and wherein at least some of the character features are displayed with sub-pixel precision on the display device.

2. The method of claim 1 wherein the act of displaying the image comprises displaying the image such that an edge of a character is displayed at a boundary between individual pixel sub-components of the same pixel.

3. The method of claim 1 or 2, wherein the data format allows the image data to be stored in a binary format for display on the display device.

4. The method of one of claims 1 to 3, wherein the data format allows the image data to be serialized.

5. The method of one of claims 1 to 4, wherein the data format allows the image to be displayed in a device-independent manner.

6. The method of one of claims 1 to 5, wherein displaying the image on the display device comprises printing a binary version of the image on the display device.

7. The method of one of claims 1 to 6, wherein the data format comprises a metafile format.

8. The method of one of claims 1 to 7, wherein the data format comprises an enhanced metafile format.

9. The method of claim 8, wherein the enhanced metafile format allows storage of graphics device interface commands related to the image.

10. The method of one of claims 1 to 9, wherein the act of converting the image data comprises the act of creating a pickled version of the image data that includes said information having the first resolution defining a layout of the image, said information having the first resolution comprising recorded application program interface calls that define the layout of the image in a device-independent manner.

11. A method of operating a processing device associated with a display device that has a plurality of pixels each having a plurality of separately controllable pixel sub-components, the method for displaying an image on the display device, comprising the acts of:
converting image data that defines an image to a data format that includes:
graphics attributes defining features of the image; and
information defining positions of features of the image in a first coordinate space having a first resolution; and
using the graphics attributes and the information defining the position of the features of the image, displaying the image with sub-pixel precision on a display device having a second resolution that is lower than the first resolution, wherein the information defining the position of the features in the coordinate space having the first resolution is used to determine the position of the features with sub-pixel precision in a second coordinate space of the display device having the second resolution.

12. The method of claim 11, wherein the act of displaying the image includes the act of mapping samples of the converted image data to pixel sub-components of the display device.

13. The method of claim 11 or 12 wherein the display device comprises a liquid crystal display (LCD) device, wherein the act of displaying the image includes the act of overscaling the converted image data in a direction perpendicular to stripes of same-colored stripes of pixel sub-components of the LCD device.

14. The method of one of claims 11 to 13, wherein the display device comprises a liquid crystal display (LCD) device, wherein the act of displaying the image includes the act of sampling an image to obtain a plurality of samples in order to determine luminosity intensity values to be applied to the pixel sub-components of the LCD display device.

15. The method of claim 14, wherein the pixel sub-components form a plurality of same-colored stripes on the display device, wherein the act of sampling information includes the act of obtaining more samples in the direction perpendicular to the pixel sub-component striping than in the direction of the pixel sub-component striping.

16. The method of one of claims 1 to 15, wherein the act of processing the converted image includes the act of filtering the image data using overlapping color filters.

17. The method of one of claims 1 to 16, wherein the graphics attributes comprise font attributes and include character information.

18. The method of one of claims 1 to 17, wherein the graphics attributes includes color information.

19. The method of one of claims 1 to 18, wherein the graphics attributes includes image size information.

20. The method of one of claims 1 to 19, wherein the information defining positions of character features of the image in a first coordinate space having a first resolution comprise recorded application program interface calls that define a layout of the image in a device-independent manner.

21. A method of operating a processing device associated with a display device that has a plurality of pixels, each pixel having a plurality of separately controllable pixel sub-components, the method for displaying an image on the display device, comprising the acts of:
converting image data that defines an image to a metafile format that includes font attributes defining character features and that includes information having a first resolution defining a layout of the image; and
processing the converted image data utilizing the font attributes and the information having the first resolution so as to display the image on a display device having a second resolution that is lower than the first resolution, including the acts of:
mapping samples of the converted image data to individual pixel sub-components utilizing the font attributes; and
displaying the image on the display device such that at least some of the character features are displayed with sub-pixel precision on the display device.

22. The method of claim 21, wherein the display device comprises a liquid crystal display (LCD) wherein the act of processing the converted image includes the act of overscaling the converted image data in the direction perpendicular to stripes of the LCD display device to create an overscaled representation of the image.

23. The method of claim 21 or 22, wherein the act of processing the converted image data includes the act of sampling information representing the image so as to obtain a plurality of samples that specify luminous intensity values to be applied to pixel sub-components of the display device.

24. The method of claim 23, wherein the samples are obtained using the information having the first resolution such that the samples can be mapped to the individual pixel sub-components with sub-pixel precision.

25. The method of one of claims 21 to 24 further comprising the act of filtering the image data using overlapping color filters.

26. A method of operating a processing device associated with a display device that has a plurality of pixels, wherein each pixel has a plurality of separately controllable pixel sub-components, the method for displaying an image on the display device, comprising the acts of:
accessing image data stored in a first format that defines an image;
converting the image data from the first format to a second format that represents a pickled version of the image, while maintaining font attributes defining character features of the image, the picked version of the image including information having a first resolution defining a layout of the image in a device-independent manner;
processing the font attributes and the information having the first resolution to obtain a plurality of samples representing the image, the samples having a resolution that is greater than a second resolution defined by the pixels of the display device;
mapping spatially different sets of the samples to individual pixel sub-components of the pixels of the display device so as to define luminous intensity values that control the pixel sub-components; and
displaying the image on the display device using the defined luminous intensity values, the image being displayed on the display device with sub-pixel precision.

27. The method of claim 26, wherein the display device comprises a liquid crystal display device.

28. The method of claim 26 or 27, wherein the pixel sub-components comprise a red sub-component, a blue sub-component, and a green sub-component.

29. The method of one of claims 26 to 28, wherein the pixel sub-components are arranged in stripes of same-colored pixel sub-components on the display device.

30. The method of one of claims 26 to 29, wherein the information having a first resolution defining a layout of the image in a device-independent manner comprises recorded application program interface calls that, if executed, are capable of causing a viewer to render the image.

31. A computer program product for implementing, in a computer system including a processing device and a display device for displaying an image, the display device having a plurality of pixels, wherein each pixel has a plurality of separately controllable pixel sub-components, a method of displaying an image on the display device, the computer program product comprising:
a computer-readable medium carrying computer executable instructions for performing the method, wherein the method includes the acts of one of claims 1 to 30.

32. A computer system comprising a processing device and a display device, the processing device being adapted to perform the method of one of claims 1 to 30.
